# EUROPEAN PATENT APPLICATION

(11) **EP 4 726 568 A1**
(43) Date of publication of application: **15.04.2026**
(21) Application number: 24219359.7
(22) Date of filing: 12.12.2024
(51) Int. Cl.: G06F 16/23, G06F 16/27

(54) **SHARDING METHOD FOR IMPROVING SCALABILITY IN BYZANTINE ENVIRONMENT**

(30) Priority: 11.10.2024 KR 20240138178
(71) Applicant: IUCF-HYU (Industry-University Cooperation Foundation Hanyang University), Seoul 04763 (KR)
(72) Inventor: RYU, Minsoo, Seoul 06601 (KR)
(74) Representative: Prüfer & Partner mbB Patentanwälte · Rechtsanwälte

(57) **Abstract**

A sharding method for improving scalability in a Byzantine environment is disclosed. The disclosed method comprises the steps of: receiving a forwarding transaction group including a cross-shard transaction of each general shard from each of the plurality of general shards; creating a global coordination sequence specifying an execution order of cross-shard transactions included in the forwarding transaction groups received from the plurality of general shards; and transmitting the global coordination sequence to the plurality of general shards, wherein each general shard that receives the global coordination sequence creates a local execution sequence that independently determines an execution order of transactions, and wherein the local execution sequence is set such that the execution order of single-shard transactions is determined autonomously and the execution order of cross-shard transactions follows the execution order of the global coordination sequence. The disclosed method has the advantage of increasing transaction throughput per second while ensuring atomicity and reducing Byzantine consensus costs by minimizing inter-shard communication in a Byzantine environment.

## Description

### CROSS-REFERENCE TO RELATED APPLICATIONS

This application claims priority under 35 U.S.C. §119(a) to Korean Patent Application No. 10-2024-0138178, filed on October 11, 2024, with the Korean Intellectual Property Office, the disclosure of which is incorporated herein in its entirety by reference.

### BACKGROUND

### 1. Technical Field

The present disclosure relates to a sharding method, and more particularly to a sharding method for improving scalability in a Byzantine environment.

### 2. Description of the Related Art

Sharding is a method of improving the scalability of a database or blockchain by partitioning data into multiple shards and having each shard execute transactions in parallel.

In the sharding method, transactions can be divided into single-shard transactions that access only data hosted in one shard and cross-shard transactions that access data hosted in multiple shards. Cross-shard transactions are the main cause of hindering the scalability of sharding.

Cross-shard transactions are not only relatively expensive to process because they access data hosted in multiple shards, but also have an atomicity requirement: either all relevant shards must commit or all must abort. If a cross-shard transaction is committed only on some shards and fails to satisfy atomicity, it will violate the consistency of the system state. For example, when a transaction to transfer 1 million won from account A to account B is executed, if 1 million won is deducted from account Abut 1 million won is not increased in account B, atomicity is not satisfied and consistency is violated.

Existing sharding methods mainly use the 2PC (two-phase commit) protocol to satisfy the atomicity of cross-shard transactions. The 2PC protocol uses four messages: Vote Request, Vote, Decision, and Acknowledgement. A server called the coordinator sends a Vote Request message to the relevant participants. Each participant decides whether to commit or abort, records it in stable storage, and sends it back to the coordinator in a Vote message. If all relevant participants respond with commit, the coordinator sends a Decision message requesting commit to all participants, and if even one participant responds with abort, the coordinator sends a Decision message requesting abort to all participants. Participants execute the transaction by committing or aborting according to the Decision message and then send an Acknowledge message to the coordinator. When the coordinator receives an Acknowledge message from all relevant participants, it starts processing a new cross-shard transaction.

In the 2PC protocol, each participant and the coordinator always record their decisions in stable storage before sending a message to ensure atomicity even in the event of a crash failure. If even one participant experiences a crash failure before sending a Vote message, the coordinator will decide to abort, so all participants will execute abort. If a participant experiences a crash failure after sending a Vote message, then immediately after recovery, it will execute a commit or abort according to the contents recorded in its stable storage or the contents recorded in the coordinator's storage. Therefore, the 2PC protocol can guarantee atomicity against any crash error.

However, if there are nodes that can experience Byzantine faults within the shard, the 2PC protocol will inevitably cause significant overhead. Since no node in the shard can be trusted, all messages sent from the shard must be verified through a Byzantine Fault Tolerance (BFT) consensus. Since messages that have not gone through consensus may contain false information, if the coordinator makes a decision on commit or abort based on such messages, atomicity may not be guaranteed. Therefore, when applying 2PC to a Byzantine environment, one cross-shard transaction requires at least four consensuses, which significantly reduces the performance (e.g., transaction throughput per second) of sharding.

Another way to ensure atomicity is the deterministic database method. The deterministic database method determines in advance the order in which transactions will be executed for a batch of transactions, ensuring that all servers execute transactions in the same order. Although the existing deterministic database method reduces the overhead that may occur in the 2PC method, it does not reduce the inter-shard communication that may occur when executing transactions. In a Byzantine environment, all inter-shard messages require BFT consensus, and this inter-shard communication also generates significant overhead, which is a major factor in hindering the scalability of sharding.

### SUMMARY OF THE INVENTION

The present disclosure proposes a method that can improve the scalability of sharding by increasing transaction throughput per second and reducing the processing time (latency) while ensuring atomicity.

The present disclosure proposes a method that can improve the scalability of sharding by minimizing inter-shard communication in a Byzantine environment and reducing the Byzantine consensus costs.

According to one aspect of the present disclosure, a sharding method for improving scalability in a Byzantine environment in a system including a coordinator and a plurality of general shards is provided, the method comprising the steps of:
receiving a forwarding transaction group including a cross-shard transaction of each general shard from each of the plurality of general shards; creating a global coordination sequence specifying an execution order of cross-shard transactions included in the forwarding transaction groups received from the plurality of general shards; and transmitting the global coordination sequence to the plurality of general shards, wherein each general shard that receives the global coordination sequence creates a local execution sequence that independently determines an execution order of transactions, and wherein the local execution sequence is set such that the execution order of single-shard transactions is determined autonomously and the execution order of cross-shard transactions follows the execution order of the global coordination sequence.

The sharding method further includes the steps of: receiving a local snapshot from each of the general shards, which aggregates data necessary for executing cross-shard transactions of each general shard; creating a global snapshot by aggregating local snapshots received from the plurality of general shards; and transmitting the global snapshot to the general shards.

The global coordination sequence is set to ensure that all cross-shard transactions are totally ordered by assigning a version number to each cross-shard transaction.

The step of creating a global snapshot includes the step of checking the version number assigned to the local snapshot and checking whether the data included in the local snapshot is the latest value.

The general shards perform write locks on the data included in the local snapshot to prevent changes to the data included in the local snapshot.

The step of creating a global snapshot includes the step of checking the version number assigned to the local snapshot and checking whether the data included in the local snapshot is the latest value.

Each of the plurality of general shards uses the global snapshot to execute cross-shard transactions without communicating with other general shards.

Each of the plurality of general shards determines whether there is a causally preceding cross-shard transaction (CPCT) for the cross-shard transaction (LCCT) that commits the data it is responsible for, and uses the global snapshot to execute the causally preceding cross-shard transaction (CPCT) together with the cross-shard transaction (LCCT) that commits the data.

According to another aspect of the present disclosure, a sharding method for improving scalability in a Byzantine environment in a system including a coordinator and a plurality of general shards is provided, the method comprising the steps of: receiving a local snapshot from each of the plurality of general shards, which aggregates data necessary for executing cross-shard transactions of each general shard; creating a global snapshot by aggregating local snapshots received from the plurality of general shards; and transmitting the global snapshot to the general shards, wherein each of the plurality of general shards uses the global snapshot to execute cross-shard transactions without communicating with other general shards.

The present disclosure has the advantage of improving the scalability of sharding by increasing the transaction throughput per second and reducing the processing time (latency) while ensuring atomicity.

In addition, the present disclosure has the advantage of minimizing inter-shard communication in a Byzantine environment, thereby reducing the cost of Byzantine consensus.

### BRIEF DESCRIPTION OF THE DRAWINGS

FIG. 1 is a block diagram showing the structure of a sharding system for a sharding method for improving scalability in a Byzantine environment of the present disclosure.
FIG. 2 is a block diagram showing the structure of a general shard included in a general shard group according to an embodiment of the present disclosure.
FIG. 3 is a block diagram showing the structure of a coordinator according to an embodiment of the present disclosure.
FIG. 4 is a diagram showing the operation of a sharding method for improving scalability in a Byzantine environment according to an embodiment of the present disclosure.
FIG. 5 is a flowchart showing a preparation task procedure in a general shard according to an embodiment of the present disclosure.
FIG. 6 is a flowchart showing a procedure of an execution task in a general shard according to an embodiment of the present disclosure.
FIG. 7 is a flowchart showing a preparation task procedure of a coordinator according to an embodiment of the present disclosure.
FIG. 8 is a flowchart showing an execution task procedure of a coordinator according to an embodiment of the present disclosure.

### DETAILED DESCRIPTION OF THE INVENTION

Hereinafter, specific embodiments according to the embodiments of the present disclosure will be described with reference to the drawings. The following detailed description is provided to assist in a comprehensive understanding of the methods, devices and/or systems described herein. However, this is only an example and the present invention is not limited thereto.

In describing the embodiments, when it is determined that detailed descriptions of known technology related to the present disclosure may unnecessarily obscure the gist of the present disclosure, the detailed descriptions thereof will be omitted. The terms used below are defined in consideration of functions in the present disclosure, but may be changed depending on the customary practice or the intention of a user or operator. Thus, the definitions should be determined based on the overall content of the present specification. The terms used herein are only for describing the embodiments, and should not be construed as limitative. Unless the context clearly indicates otherwise, the singular forms are intended to include the plural forms as well. It should be understood that the terms "comprises," "comprising," "includes," and "including," when used herein, specify the presence of stated features, numerals, steps, operations, elements, or combinations thereof, but do not preclude the presence or addition of one or more other features, numerals, steps, operations, elements, or combinations thereof.

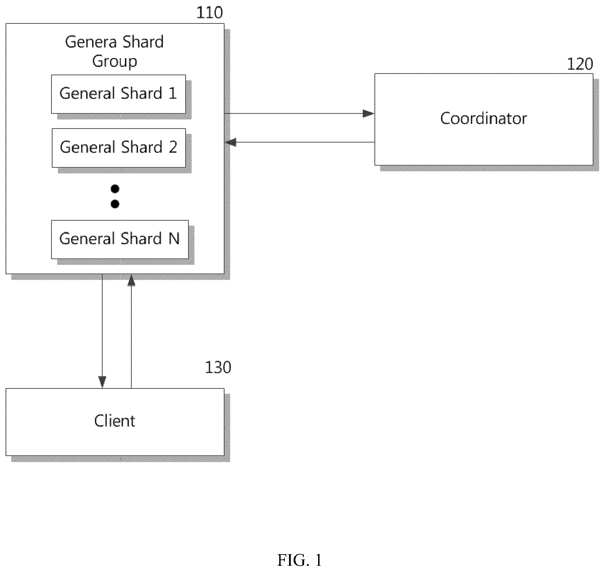

FIG. 1 is a block diagram showing the structure of a sharding system for a sharding method for improving scalability in a Byzantine environment of the present disclosure.

Referring to FIG. 1, a sharding system according to an embodiment of the present disclosure includes a general shard group 110, a coordinator 120, and a client 130.

The client 130 creates a transaction and submits the transaction to the shards included in the general shard group. The general shard group 110 includes a plurality of general shards, and the client 130 submits the transaction to the general shards responsible for the data accessed by the transaction to be requested.

Transactions can be divided into transactions that access data in a single shard and transactions that access data handled by multiple shards. In this embodiment, a transaction that accesses data in a single shard is defined as a single-shard transaction, and a transaction that accesses data handled by multiple shards is defined as a cross-shard transaction.

If the transaction submitted by the client 130 is a single-shard transaction, the client 130 submits the transaction to only one general shard. If the transaction submitted by the client 130 is a cross-shard transaction, the client 130 submits the transaction to multiple general shards that are responsible for the data accessed by the transaction.

The transaction submitted by the client 130 is processed by general shards belonging to the general shard group 110, and the client 130 receives information about the transaction processing result as response information.

The general shards belonging to the general shard group 110 receive transactions from clients 130 and then execute the received transactions. For single-shard transactions, the general shards execute them in the same manner as in the conventional manner. However, in the case of cross-shard transactions, the present disclosure performs a separate operation to minimize inter-shard communication. Specifically, each general shard collects only cross-shard transactions among the received transactions to create a forwarding transaction group (FTG) and transmits the created forwarding transaction group to the coordinator 120.

Each general shard may create a forwarding transaction group and transmit it to the coordinator 120 when a preset number of cross-shard transactions are collected. Alternatively, each general shard may create a forwarding transaction group and send it to the coordinator 120 whenever a timeout occurs.

In addition, each general shard creates a local snapshot (LS), which is data required for execution of a cross-shard transaction included in a forwarding transaction group, and transmits the created local snapshot to the coordinator 120.

The coordinator 120 is a special type of shard that receives forwarding transaction groups and local snapshots transmitted by each general shard. The coordinator 120 determines the execution order of cross-shard transactions received from all general shards. In this embodiment, the execution order of cross-shard transactions determined by the coordinator 120 is defined as a global coordination sequence (GCS).

In addition, the coordinator 120 collects local snapshots received from each general shard and creates a global snapshot.

The global coordination sequence and global snapshot created by the coordinator 120 are transmitted to the general shards of the general shard group 110, and the general shards determine the execution order of the transaction and execute the transaction using the global coordination sequence and global snapshot.

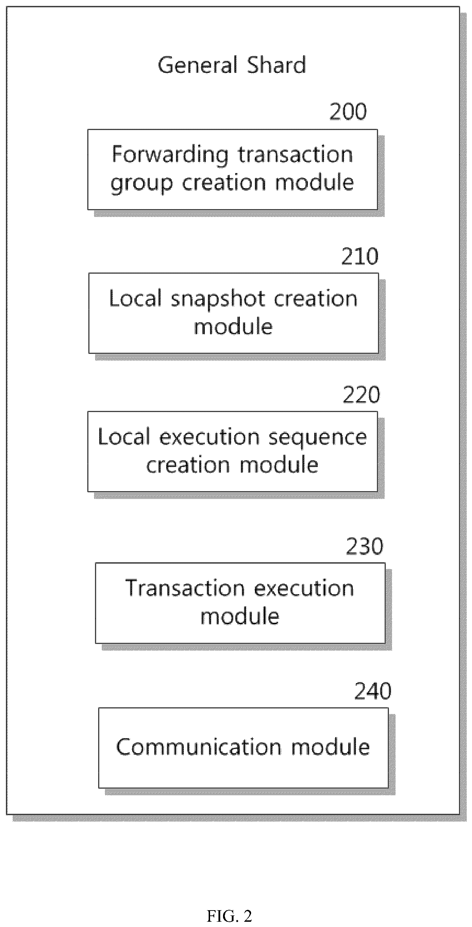

FIG. 2 is a block diagram showing the structure of a general shard included in a general shard group according to an embodiment of the present disclosure.

Referring to FIG. 2, a general shard according to an embodiment of the present disclosure includes a forwarding transaction group creation module 200, a local snapshot creation module 210, a local execution sequence creation module 220, a transaction execution module 230, and a communication module 240.

The forwarding transaction group creation module 200 collects only cross-shard transactions among the transactions submitted by clients 130 and creates a forwarding transaction group. The transactions submitted by clients are divided into single-shard transactions and cross-shard transactions, and the forwarding transaction group creation module 200 selects only cross-shard transactions and creates a forwarding transaction group.

As described above, when a preset number of cross-shard transactions are collected or a timeout occurs, the forwarding transaction creation module 200 creates a forwarding transaction group for the cross-shard transactions collected during that time.

The local snapshot creation module 210 creates a local snapshot after a forwarding transaction group is created. When the cross-shard transactions of the forwarding transaction group are determined, the local snapshot creation module 210 obtains data accessed by the cross-shard transactions and collects the obtained data to create a local snapshot. According to an embodiment of the present disclosure, the local snapshot creation module 210 creates a local snapshot composed only of the latest values of data handled by a general shard.

Meanwhile, the local snapshot creation module 210 performs write protection on the data included in the created local snapshot. Write protection prevents the data in the local snapshot from being changed by other transactions executed locally before the cross-shard transaction accesses it.

The local execution sequence creation module 220 creates a local execution sequence (LES), which is the execution order of transactions to be executed in a shard. According to a preferred embodiment of the present disclosure, general shards independently determine the execution order of transactions. Each general shard is not bound to the transaction execution order of other general shards and independently determines the transaction execution order.

When creating the local execution sequence, a general shard autonomously determines the execution order of single-shard transactions that it should execute. However, the execution order of cross-shard transactions is determined to follow the cross-shard transaction execution order of the global coordination sequence provided by the coordinator 120. In short, the local execution sequence creation module 220 creates a local execution sequence by following the order of the global coordination sequence for cross-shard transactions and autonomously determining the order for single-shard transactions.

Meanwhile, the local execution sequence creation module 220 creates a local execution sequence to execute a cross-shard transaction (LCCT: Local-Commit Cross-shard Transaction) that commits the data it is responsible for together with a cross-shard transaction (CPCT: Causally Preceding Cross-Shard Transaction) that causally precedes it.

CPCT is a transaction that must be executed before LCCT is executed. Since the data resulting from the execution of CPCT must be used in LCCT, CPCT is a causally preceding transaction. If CPCT is a cross-shard transaction executed in another general shard, it must wait for the execution of the corresponding CPCT, and inter-shard communication must be performed to find out the execution result of the corresponding CPCT.

In the present disclosure, when a cross-shard transaction that must be executed to eliminate waiting and inter-shard communication is an LCCT, a CPCT associated with the LCCT is found from the global coordination sequence, and a local sequence is created so that the LCCT and the associated CPCT are executed together. By this local sequence, the LCCT and CPCT are directly executed together without waiting for the execution result of the CPCT of other general shards. As a result, since each general shard can execute transactions at its own pace regardless of the operations of other general shards, it is possible to prevent performance degradation due to the delay of other specific general shards.

To identify LCCT and CPCT, a read/write set, which is a set of data IDs that each transaction reads and writes, can be used. If the data that a specific general shard is responsible for is included in the write set of transaction Tₖ, then transaction Tₖ is determined to be the LCCT of that general shard. If there is a transaction Tⱼ that performs a write on data belonging to the read set of Tₖ while preceding Tₖ, which is determined to be an LCCT in the global coordination sequence, transaction Tⱼ is considered to be the CPCT of that shard. This means that the read set of Tₖ and the write set of Tⱼ have a non-empty intersection. In the same way, if there is a transaction Tᵢ that performs a write on data belonging to the read set of Tⱼ while preceding Tⱼ, which is determined to be a CPCT, transaction Tᵢ is also considered to be the CPCT of that shard.

This local execution sequence creation method of the present disclosure can simplify communication and reduce communication costs.

In the case of the existing deterministic database method, the control server determines the execution order of all transactions and broadcasts it to the shards, and the distributed shards share the execution order of all transactions while exchanging information with each other, which increases the number of communications and requires high Byzantine consensus costs. However, the present disclosure simplifies communications compared to the deterministic database method. In particular, since general shards autonomously determine the order of single-shard transactions, it can also be effective in minimizing the performance impact of cross-shard transactions on single-shard transactions.

The transaction execution module 230 executes the transactions according to the created local execution sequence. Since transaction execution is a general process, a detailed description of the execution process is omitted.

The communication module 240 is a module for communication between the general shard and the coordinator. The forward transaction group and local snapshot created from the general shard are transmitted to the coordinator through the communication module 240. In addition, the global coordination sequence and global snapshot transmitted from the coordinator are received by the general shard through the communication module 240.

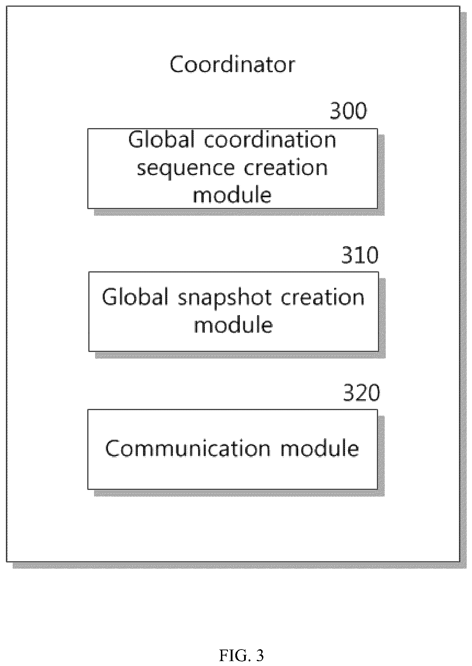

FIG. 3 is a block diagram showing the structure of a coordinator according to an embodiment of the present disclosure.

Referring to FIG. 3, the coordinator according to an embodiment of the present disclosure includes a global coordination sequence creation module 300, a global snapshot creation module 310, and a communication module 320.

The global coordination sequence creation module 300 receives a forwarding transaction group from general shards and creates a global coordination sequence containing the execution order of cross-shard transactions. The execution order of cross-shard transactions can be determined in various ways. According to one embodiment of the present disclosure, the execution order of cross-shard transactions may be determined in the order in which the forwarding transaction group is received. According to another embodiment of the present disclosure, the execution order of the received cross-shard transactions may be randomly determined.

Of course, it will be obvious to those skilled in the art that there are many other ways to determine the execution order of cross-shard transactions other than the above method.

The global coordination sequence creation module 300 assigns a version number to each cross-shard transaction of the created global coordination sequence so that all cross-shard transactions are totally ordered. The global coordination sequence with version numbers assigned in this way is then transmitted to general shards.

The global snapshot creation module 310 creates a global snapshot using local snapshots received from general shards. A global snapshot may also be defined as data that aggregates all local snapshots.

The global snapshot creation module 310 can check the version number assigned to the local snapshot and check whether the data included in the local snapshot is the latest value or not based on the version number. The global snapshot creation module 310 can create a global snapshot that includes only the latest value, thereby ensuring the consistency of the system.

The global snapshot created by the global snapshot creation module 310 is transmitted to each general shard, and each general shard can execute cross-shard transactions using the global snapshot.

When general shards execute cross-shard transactions via the global snapshot, additional inter-shard communication to obtain data values that other general shards are responsible for can be eliminated. This is because all remote data values accessed by the cross-shard transaction are included in the global snapshot.

The communication module 320 is a module for communication between the coordinator and general shards. The forwarding transaction group and local snapshot created in the general shards are received through the communication module 320. In addition, the global coordination sequence and global snapshot created in the coordinator are transmitted to the general shards through the communication module 320.

In the above, for the convenience of explanation, the general shard and the coordinator are described as independent devices that operate independently. However, it will be obvious to those skilled in the art that the general shard and the coordinator are mode shards, and a single device can simultaneously function as both a general shard and a coordinator.

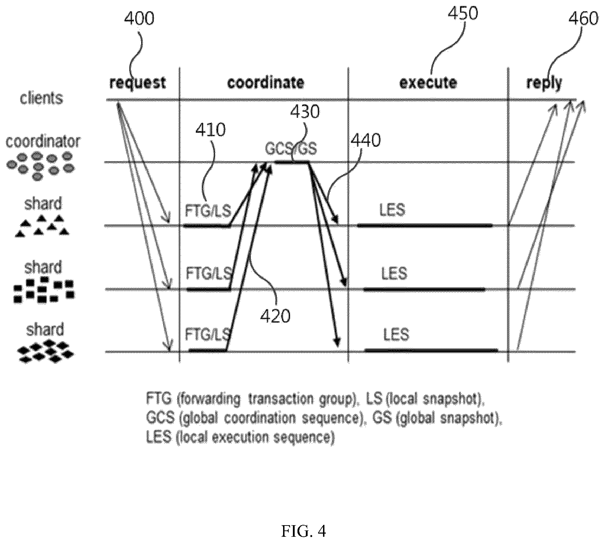

FIG. 4 is a diagram showing the operation of a sharding method for improving scalability in a Byzantine environment according to an embodiment of the present disclosure.

Referring to FIG. 4, clients 130 transmits requests to each general shard (400). Here, the request means submitting a transaction. The client submits the transaction to the general shard associated with the requested transaction.

Each general shard determines whether the received transaction is a single-shard transaction or a cross-shard transaction, and then creates a forwarding transaction group by aggregating only cross-shard transactions. In addition, each general shard creates a local snapshot, which is the data required to execute cross-shard transactions (410).

The forwarding transaction group and local snapshot created in each general shard are transmitted to the coordinator (420).

The coordinator creates a global snapshot that aggregates the global coordination sequence containing the execution order of cross-shard transactions and the local snapshot using the forwarding transaction group and the local snapshot (430).

The global coordination sequence and global snapshot created by the coordinator are transmitted to all general shards (440).

Each general shard that receives the global coordination sequence and global snapshot creates a local execution sequence based on the global coordination sequence, and executes a transaction based on the created local execution sequence (450).

As explained above, local execution sequences are created autonomously for each general shard. Local execution sequences are created so that the execution order of cross-shard transactions follows the order of the global coordination sequence, but the execution order of general-shard transactions is determined autonomously. In addition, as explained above, local execution sequences are created so that the causally preceding cross-shard transaction (CPCT) is executed together with the cross-shard transaction (LCCT) that commits data.

The results of transaction execution in each general shard are transmitted to clients (460).

As can be seen from FIG. 4, the sharding method of the present disclosure does not perform inter-shard communication between general shards. Only communication between the coordinator, which is a special type of shard, and general shards is performed. Therefore, inter-shard communication is minimized, and the Byzantine consensus cost that occurs whenever inter-shard communication occurs can be minimized, thereby improving the scalability of the shards.

In the present disclosure, a general shard and a coordinator, which is a special type of shard, can operate by dividing them into two tasks: a preparation task and an execution task, respectively.

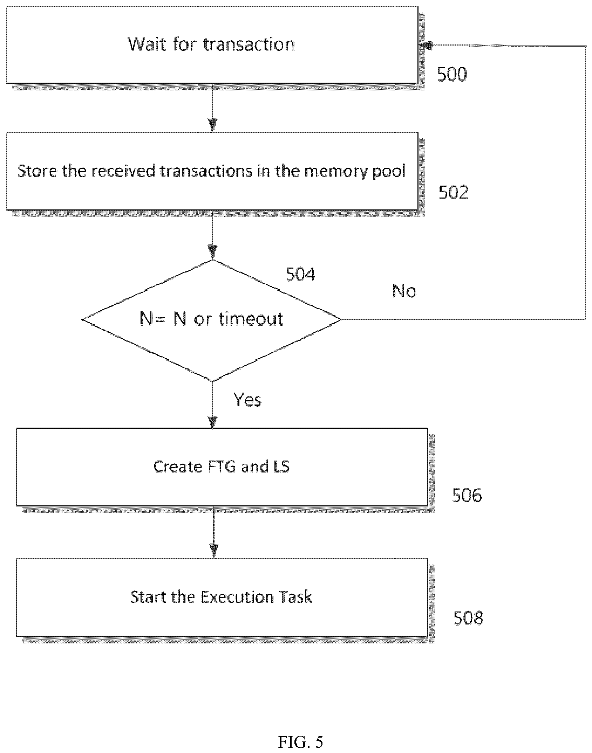

FIG. 5 is a flowchart showing a preparation task procedure in a general shard according to an embodiment of the present disclosure.

Referring to FIG. 5, a general shard is initially in a mode waiting for a transaction to be received from a client (step 500).

When transactions are received, the received transactions are stored in the memory pool (step 502).

It is determined whether the number of received transactions reaches a preset threshold or whether the time taken to receive transactions reaches a preset timeout (step 504). The reception of transactions continues until the threshold is reached or the timeout is reached.

A forwarding transaction group and a local snapshot are created using transactions stored in the memory pool (step 506).

Once the forwarding transaction group and local snapshot are created, the execution task is started (step 508).

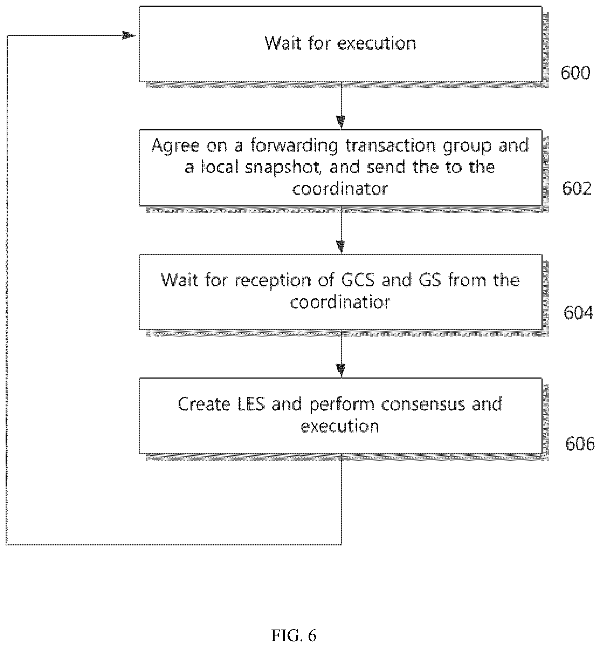

FIG. 6 is a flowchart showing a procedure of an execution task in a general shard according to an embodiment of the present disclosure.

Referring to FIG. 6, a general shard is initially in a mode waiting for execution in the execution task (step 600).

When execution starts, the general shard agrees on a forwarding transaction group and a local snapshot, and sends them to the coordinator (step 602).

The general shard receives a global coordination sequence and a global snapshot from the coordinator (step 604).

Based on the global coordination sequence and the global snapshot, a local execution sequence (LES) is created, and consensus and execution are performed (step 606).

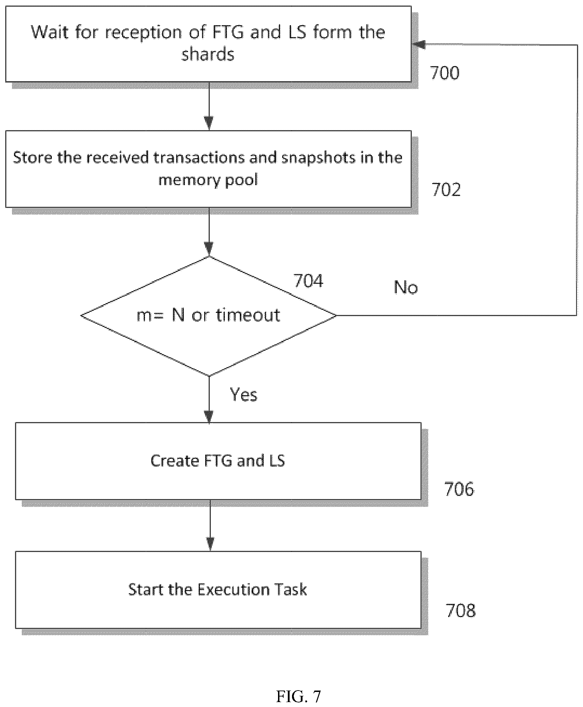

FIG. 7 is a flowchart showing a preparation task procedure of a coordinator according to an embodiment of the present disclosure.

Referring to FIG. 7, the coordinator is initially in a mode of waiting for reception of forwarding transaction groups and local snapshots from general shards in the preparation task (step 700).

The transactions and local snapshots received from general shards are stored in the memory pool of the coordinator (step 702).

It is determined whether the number of received transactions reaches a preset threshold or the transaction reception time reaches a preset timeout (step 704). The reception of transactions continues until the threshold is reached or the timeout is reached.

The coordinator creates a global coordination sequence and a global sequence based on the received transactions and snapshots (step 706).

Once the global coordination sequence and the global sequence are created, it enters a mode of starting the execution task (step 708).

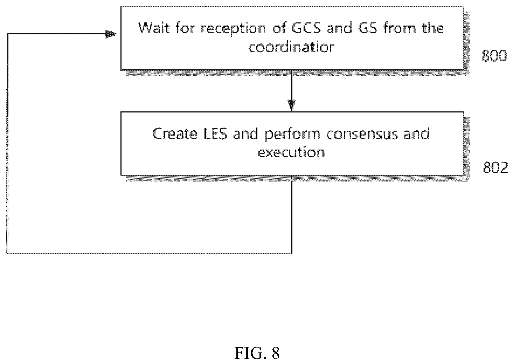

FIG. 8 is a flowchart showing an execution task procedure of a coordinator according to an embodiment of the present disclosure.

Referring to FIG. 8, the coordinator is initially in a mode of waiting for execution in the execution task (step 800).

When execution starts, the coordinator transmits the global coordination sequence and the global snapshot to the general shards through consensus (step 802).

Although the disclosure has been disclosed with reference to the embodiments illustrated in the drawings, the embodiments are only for illustrative purposes, and those skilled in the art will appreciate that various modifications and other equivalent embodiments are possible, without departing from the scope and spirit of the disclosure as defined in the accompanying claims. Therefore, the true technical protection scope of the present disclosure should be defined by the technical spirit set forth in the appended scope of claims.

## Claims

1. A sharding method for improving scalability in a Byzantine environment in a system including a coordinator and a plurality of general shards, the method comprising the steps of:
receiving a forwarding transaction group including a cross-shard transaction of each general shard from each of the plurality of general shards;
creating a global coordination sequence specifying an execution order of cross-shard transactions included in the forwarding transaction groups received from the plurality of general shards; and
transmitting the global coordination sequence to the plurality of general shards,
wherein each general shard that receives the global coordination sequence creates a local execution sequence that independently determines an execution order of transactions, and wherein the local execution sequence is set such that the execution order of single-shard transactions is determined autonomously and the execution order of cross-shard transactions follows the execution order of the global coordination sequence.

2. The sharding method for improving scalability in a Byzantine environment according to claim 1,
wherein the sharding method further includes the steps of:
receiving a local snapshot from each of the general shards, which aggregates data necessary for executing cross-shard transactions of each general shard;
creating a global snapshot by aggregating local snapshots received from the plurality of general shards; and
transmitting the global snapshot to the general shards.

3. The sharding method for improving scalability in a Byzantine environment according to claim 1 or 2,
wherein the global coordination sequence is set to ensure that all cross-shard transactions are totally ordered by assigning a version number to each cross-shard transaction.

4. The sharding method for improving scalability in a Byzantine environment according to claim 2 or 3,
wherein the step of creating a global snapshot includes the step of checking the version number assigned to the local snapshot and checking whether the data included in the local snapshot is the latest value.

5. The sharding method for improving scalability in a Byzantine environment according to one of claims 2 to 4,
wherein the general shards perform write locks on the data included in the local snapshot to prevent changes to the data included in the local snapshot.

6. The sharding method for improving scalability in a Byzantine environment according to one of claims 2 to 5,
wherein the step of creating a global snapshot includes the step of checking the version number assigned to the local snapshot and checking whether the data included in the local snapshot is the latest value.

7. The sharding method for improving scalability in a Byzantine environment according to one of claims 2 to 6,
wherein each of the plurality of general shards uses the global snapshot to execute cross-shard transactions without communicating with other general shards.

8. The sharding method for improving scalability in a Byzantine environment according to one of claims 1 to 7,
wherein each of the plurality of general shards determines whether there is a causally preceding cross-shard transaction (CPCT) for the cross-shard transaction (LCCT) that commits the data it is responsible for, and uses the global snapshot to execute the causally preceding cross-shard transaction (CPCT) together with the cross-shard transaction (LCCT) that commits the data.

9. A sharding method for improving scalability in a Byzantine environment in a system including a coordinator and a plurality of general shards, the method comprising the steps of:
receiving a local snapshot from each of the plurality of general shards, which aggregates data necessary for executing cross-shard transactions of each general shard;
creating a global snapshot by aggregating local snapshots received from the plurality of general shards; and
transmitting the global snapshot to the general shards,
wherein each of the plurality of general shards uses the global snapshot to execute cross-shard transactions without communicating with other general shards.

10. The sharding method for improving scalability in a Byzantine environment according to claim 9,
wherein the step of creating a global snapshot includes the step of checking the version number assigned to the local snapshot and checking whether the data included in the local snapshot is the latest value.

11. The sharding method for improving scalability in a Byzantine environment according to claim 9 or 10,
wherein the general shards perform write locks on the data included in the local snapshot to prevent changes to the data included in the local snapshot.

12. The sharding method for improving scalability in a Byzantine environment according to one of claims 9 to 11,
wherein each of the plurality of general shards determines whether there is a causally preceding cross-shard transaction (CPCT) for the cross-shard transaction (LCCT) that commits the data it is responsible for, and uses the global snapshot to execute the causally preceding cross-shard transaction (CPCT) together with the cross-shard transaction (LCCT) that commits the data.

13. The sharding method for improving scalability in a Byzantine environment according to one of claims 9 to 12,
wherein the method further comprises the steps of:
receiving a forwarding transaction group including a cross-shard transaction of each general shard from each of the plurality of general shards;
creating a global coordination sequence specifying an execution order of cross-shard transactions included in the forwarding transaction groups received from the plurality of general shards; and
transmitting the global coordination sequence to the plurality of general shards,
wherein each general shard that receives the global coordination sequence creates a local execution sequence that independently determines an execution order of transactions, and wherein the local execution sequence is set such that the execution order of single-shard transactions is determined autonomously and the execution order of cross-shard transactions follows the execution order of the global coordination sequence.

14. The sharding method for improving scalability in a Byzantine environment according to claim 13,
wherein the global coordination sequence is set to ensure that all cross-shard transactions are totally ordered by assigning a version number to each cross-shard transaction.

15. A sharding device for improving scalability in a Byzantine environment, the device including:
a processor; and
a memory connected to the processor,
wherein the processor executes the method of any one of claims 1 to 14.
